# EUROPEAN PATENT APPLICATION

(11) **EP 4 417 773 A1**
(43) Date of publication of application: **21.08.2024**
(21) Application number: 23175074.6
(22) Date of filing: 24.05.2023
(51) Int. Cl.: E04H 4/16

(54) **ROBOT SWIMMING POOL CLEANER CAPABLE OF OUT-OF-WATER DETECTION AND OUT-OF-WATER DETECTION METHOD THEREOF**

(30) Priority: 14.02.2023 CN 202310112439
(71) Applicant: Shenzhen Aiper Intelligent Co., Ltd, Shenzhen (CN)
(72) Inventor: Wang, Yang, Shenzhen (CN); Yu, Xueliang, Shenzhen (CN); Wang, Keke, Shenzhen (CN)
(74) Representative: Zaboliene, Reda

(57) **Abstract**

Robot swimming pool cleaner capable of out-of-water detection and an out-of-water detection method thereof. The robot swimming pool cleaner includes a main body (1); a walking wheel group (2), which is mounted at the bottom of the main body and used to drive the main body to move; a filtering chamber, (3) which is arranged inside the main body and located at the bottom of the main body; the bottom of the filtering chamber is communicated with the outside by a water inlet (31), and the top is provided with a filter screen (32) which is used to filter and store garbage into the filtering chamber; a detection device, which includes a sliding rod detection device, and is used for position detection of whether the main body is out-of-water; the sliding rod detection device includes a sliding rod, a first buoyancy block (412), and a position sensor, the sliding rod is arranged at the top of the main body, the first buoyancy block is slidably connected to the sliding rod, and the position sensor is arranged on the sliding rod, and used to detect the position of the first buoyancy block on the sliding rod; and a control device, which is mounted inside the main body, and connected with the detection device.

## Description

### TECHNICAL FIELD

The present application belongs to the field of cleaning technologies, and specifically relates to a robot swimming pool cleaner capable of out-of-water detection and an out-of-water detection method thereof.

### BACKGROUND

A robot swimming pool cleaner is an underwater cleaning robot that may repeatedly clean dirt on the bottom and walls of a swimming pool, filter pool water, collect pool garbage, and make the water quality of the swimming pool as clear as new. Due to its strong cleaning ability, simple structure, excellent performance, small volume, light weight, high efficiency, high flow rate, easy maintenance and other characteristics, the robot swimming pool cleaner may help people easily achieve daily cleaning of the swimming pool, change a traditional manual cleaning manner, and make swimming pool cleaning work more convenient.

The robot swimming pool cleaner currently available in the market generally has a problem of inaccurate out-of-water detection, which results in problems as the robot swimming pool cleaner itself crosses the water level line or even climbs out of the swimming pool. After the air enters, it may cause the internal water absorption capacity of the robot swimming pool cleaner to be decreased, and the pollutant absorption ability of the robot swimming pool cleaner is reduced. At the same time, the inhalation of the air may also leads to an impossibility of the robot swimming pool cleaner to continuously adsorb on the swimming pool wall, so that it may fall off, thereby the cleaning effect and the cleaning efficiency of the swimming pool may be affected.

### SUMMARY

The present application provides a robot swimming pool cleaner capable of out-of-water detection and an out-of-water detection method thereof. By arranging a detection device on the robot swimming pool cleaner, it is used to clean the water level line while the swimming pool wall or bottom is cleaned by the robot swimming pool cleaner, and detect whether a main body is out-of-water, thereby itself is avoided from exceeding the water surface and inhaling a large amount of the air, the water absorption and pollutant absorption of the robot swimming pool cleaner are avoided from being affected, and the cleaning efficiency and effect are improved; and by arranging a sliding rod detection device, a first buoyancy block may be slidably connected to a sliding rod, the first buoyancy block has a sufficient space for movement, which may prevent accidental triggering of a position sensor and improve results of the out-of-water detection.

A robot swimming pool cleaner capable of out-of-water detection includes: a main body, a walking wheel group, a filtering chamber, a detection device, and a control device.

The walking wheel group is mounted at the bottom of the main body, and used to drive the main body to move.

The filtering chamber is arranged inside the main body, and located at the bottom of the main body; and the bottom of the filtering chamber is communicated with the outside by a water inlet, the top is provided with a filter screen, and the filter screen is used to filter and store garbage into the filtering chamber.

The detection device includes a sliding rod detection device and/or a swing rod detection device, the sliding rod detection device is used to judge whether the main body is out-of-water by detecting a vertical position of a pre-arranged first buoyancy block, and the density of the first buoyancy block is less than the density of water; and the swing rod detection device includes a swing rod and a second buoyancy block arranged at one end of the swing rod, the other end of the swing rod is rotatably connected with the main body, the swing rod detection device is used to judge whether the main body is out-of-water by detecting a rotation angle of the swing rod, and the density of the second buoyancy block is less than the density of water.

The control device is mounted inside the main body, and connected with the detection device.

By arranging the detection device on the robot swimming pool cleaner, it is used to clean the water level line while the swimming pool wall or bottom is cleaned by the robot swimming pool cleaner, and detect whether the main body is out-of-water, thereby itself is avoided from exceeding the water surface and inhaling a large amount of the air, the water absorption and pollutant absorption of the robot swimming pool cleaner are avoided from being affected, and the cleaning efficiency and effect are improved; by arranging the sliding rod detection device, the first buoyancy block may be slidably connected to the sliding rod, the first buoyancy block has the sufficient space for movement, which may prevent accidental triggering of the position sensor and improve results of the out-of-water detection; at the same time, the position sensor is used to detect the position of the first buoyancy block on the sliding rod during the cleaning process of the pool wall, and the out-of-water detection of the robot swimming pool cleaner is performed, to avoid it from exceeding the water level. By arranging the swing rod detection device and arranging the second buoyancy block on the swing rod, the influence of friction during the swing rod rotation is reduced, thereby a situation of jamming and failure in the rotation process is effectively avoided; at the same time, the angle sensor is used to detect the rotation angle of the swing rod in the cleaning process of the cleaning pool wall or bottom, and the out-of-water detection of the robot swimming pool cleaner is performed, to avoid it from exceeding the water level.

Further, the sliding rod detection device further includes a sliding rod and a position sensor, the sliding rod is arranged at the top of the main body, the first buoyancy block is slidably connected to the sliding rod, the position sensor is arranged on the sliding rod, and the position sensor is used to detect the position of the first buoyancy block on the sliding rod.

Further, the robot swimming pool cleaner further includes a detection chamber, a detection device, and a control device.

The detection chamber is arranged inside the main body, and located at the top of the main body; and the detection chamber is provided with a detection port communicated with the outside.

The detection device includes a swing rod detection device, the swing rod detection device is mounted in the detection chamber, and used to judge whether the main body is out-of-water by angle detection; the swing rod detection device further includes a limiting block and an angle sensor, one end of the swing rod is connected to an inner wall of the detection chamber, the other end of the swing rod is rotated around a connection point connected to the inner wall of the detection chamber, the second buoyancy block is arranged at one end, away from the connection point, of the swing rod, the limiting block is fixedly mounted on the inner wall of the detection chamber, located on a rotation stroke of the swing rod, and used to limit the rotation angle of the swing rod, and the angle sensor is arranged at the connection point, and used to detect the rotation angle of the swing rod.

The control device is mounted inside the main body, and connected with the detection device.

By arranging the swing rod detection device and arranging the second buoyancy block on the swing rod, the influence of friction during the swing rod rotation is reduced, thereby a situation of jamming and failure in the rotation process is effectively avoided; at the same time, the angle sensor is used to detect the rotation angle of the swing rod in the cleaning process of the cleaning pool wall or bottom, and the out-of-water detection of the robot swimming pool cleaner is performed, to avoid it from exceeding the water level.

Further, the main body is further internally provided with a sealing chamber and a water spraying port, the sealing chamber and the water spraying port are both arranged above the filtering chamber, and the sealing chamber is horizontally arranged with the water spraying port; and the water spraying port is communicated with the outside, and used to spray water filtered by the filter screen out of the interior of the main body.

Further, the control device is mounted in the sealing chamber; and the control device includes: a motor and a control circuit.

An output shaft of the motor penetrates through the sealing chamber and extends to the water spraying port, the motor is dynamically seal-connected with the sealing chamber, and the output shaft is equipped with an impeller.

The control circuit is electrically connected with the motor and the detection device respectively, and the control circuit is used to respectively drive the impeller on the output shaft to rotate and drive the main body to move, receive an out-of-water detection signal sent by the detection device, and issue an alarm.

By sealing the control device in the sealing chamber, the control device may be sealed better, to prevent the control circuit from contacting with the water.

Further, the position sensor and the angle sensor are any one of a Hall sensor, a photoelectric switch, and a micro switch.

Further, the detection chamber is horizontally arranged with the sealing chamber and the water spraying port, and the detection chamber is arranged at one end away from the water spraying port.

An out-of-water detection method for the robot swimming pool cleaner capable of out-of-water detection is used to perform position detection while a swimming pool wall is cleaned by the robot swimming pool cleaner, and by detecting the position of the first buoyancy block on the sliding rod while the swimming pool wall is cleaned by the robot swimming pool cleaner, it is judged whether the main body is out-of-water.

By the position detection, it is judged whether the robot swimming pool cleaner is out-of-water, and it is ensured that the robot swimming pool cleaner may not cross the water line and always clean the pool wall or bottom, thereby the cleaning efficiency and the cleaning effect of the robot swimming pool cleaner are improved.

Further, while the position detection is performed, the control device controls the robot swimming pool cleaner to move vertically upwards along the pool wall. The specific process includes the following steps.
S1: while the robot swimming pool cleaner moves in an underwater position, and the water surface is higher than the top of the sliding rod, the first buoyancy block continuously remains at the top of the sliding rod under the buoyancy action;
S2: while the robot swimming pool cleaner continues to move upwards, and the water surface is located between the top and bottom of the sliding rod, the first buoyancy block slides vertically downwards along the sliding rod under the buoyancy action of water and its own gravity action; and
S3: while the robot swimming pool cleaner continues to move upwards, and the water surface does not exceed the bottom of the sliding rod, the first buoyancy block continuously remains at the bottom of the sliding rod under its own gravity action, and the position sensor detects the position of the first buoyancy block, identifies a robot swimming pool cleaner out-of-water signal, and issues an alarm prompt.

An out-of-water detection method for the robot swimming pool cleaner capable of out-of-water detection is used to perform angle detection while a swimming pool wall is cleaned by the robot swimming pool cleaner, and by detecting the rotation angle of the swing rod while the swimming pool wall or bottom is cleaned by the robot swimming pool cleaner, it is judged whether the main body is out-of-water.

By the angle detection, it is judged whether the robot swimming pool cleaner is out-of-water, and it is ensured that the robot swimming pool cleaner may not cross the water line and always clean the pool wall or bottom, thereby the cleaning efficiency and the cleaning effect of the robot swimming pool cleaner are improved.

Further, while the angle detection is performed, the control device controls the robot swimming pool cleaner to move vertically upwards along the pool wall or move horizontally along the pool bottom. The specific process includes the following steps.
T1: while the robot swimming pool cleaner moves in an underwater position, and the water surface is higher than the limiting block, the second buoyancy block on the swing rod continuously makes the swing rod abut with the limiting block under the buoyancy action;
T2: while the robot swimming pool cleaner continues to move upwards along the pool wall or move horizontally along the pool bottom, and the water surface is located between the limiting block and the bottom of the swing rod, the second buoyancy block on the swing rod is rotated around the connection point of the swing rod in the direction away from the limiting block under the buoyancy action of water and its own gravity action; and
T3: while the robot swimming pool cleaner continues to move upwards along the pool wall or move horizontally along the pool bottom, and the water surface does not exceed the bottom of the swing rod, the second buoyancy block on the swing rod continuously keeps the swing rod in a vertical downward or horizontal state under its own gravity action, and the angle sensor detects the rotation angle of the swing rod, identifies a robot swimming pool cleaner out-of-water signal, and issues an alarm prompt.

The beneficial effects of the present application are as follows.
1. In the present application, by arranging the detection device on the robot swimming pool cleaner, it is used to clean the water level line while the swimming pool wall or bottom is cleaned by the robot swimming pool cleaner, and detect whether the main body is out-of-water, thereby itself is avoided from exceeding the water surface and inhaling a large amount of the air, the water absorption and pollutant absorption of the robot swimming pool cleaner are avoided from being affected, and the cleaning efficiency and effect are improved; by arranging the sliding rod detection device, the first buoyancy block may be slidably connected to the sliding rod, the first buoyancy block has the sufficient space for movement, which may prevent accidental triggering of the position sensor and improve results of the out-of-water detection; at the same time, the position sensor is used to detect the position of the first buoyancy block on the sliding rod during the cleaning process of the pool wall, and the out-of-water detection of the robot swimming pool cleaner is performed, to avoid it from exceeding the water level.
2. In the present application, by arranging the swing rod detection device and arranging the second buoyancy block on the swing rod, the influence of friction during the swing rod rotation is reduced, thereby a situation of jamming and failure in the rotation process is effectively avoided; at the same time, the angle sensor is used to detect the rotation angle of the swing rod in the cleaning process of the cleaning pool wall or bottom, and the out-of-water detection of the robot swimming pool cleaner is performed, to avoid it from exceeding the water level.
3. In the present application, by the position detection and the angle detection, it is judged whether the robot swimming pool cleaner is out-of-water, and it is ensured that the robot swimming pool cleaner may not cross the water line and always clean the pool wall or bottom, thereby the cleaning efficiency and the cleaning effect of the robot swimming pool cleaner are improved.

### BRIEF DESCRIPTION OF THE DRAWINGS

Fig. 1 is a structure schematic diagram of a robot swimming pool cleaner in Embodiment 1;
Fig. 2 is a structure schematic diagram of the robot swimming pool cleaner while it moves vertically upwards and is in an underwater position during the pool wall cleaning process in Embodiment 1;
Fig. 3 is a structure schematic diagram of the robot swimming pool cleaner while it moves vertically upwards and exceeds the water line during the pool wall cleaning process in Embodiment 1;
Fig. 4 is a structure schematic diagram of the robot swimming pool cleaner while it moves vertically upwards and is in the underwater position during the pool wall cleaning process in Embodiment 2;
Fig. 5 is a structure schematic diagram of the robot swimming pool cleaner while it moves vertically upwards and exceeds the water line during the pool wall cleaning process in Embodiment 2;
Fig. 6 is a structure schematic diagram of the robot swimming pool cleaner while it moves horizontally and is in the underwater position during the pool bottom cleaning process in Embodiment 2; and

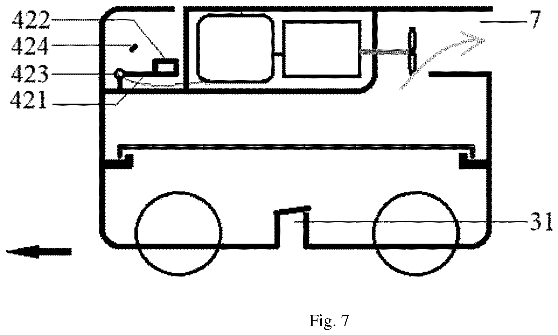

Fig. 7 is a structure schematic diagram of the robot swimming pool cleaner while it moves horizontally and exceeds the water line during the pool bottom cleaning process in Embodiment 2.

Drawing reference signs:
1. Main body;
2. Walking wheel group;
3. Filtering chamber; 31. Water inlet; 32. Filter screen; 33. Chamber cover;
411. Sliding rod; 412. First buoyancy block; 413. Position sensor; 421. Swing rod; 422. Second buoyancy block; 423. Angle sensor; 424. Limiting block; 425. Detection chamber; 426. Detection port;
51. Motor; 511. Output shaft; 512. Impeller; 52. Control circuit.
6. Sealing chamber; and
7. Water spraying port.

### DETAILED DESCRIPTION OF THE EMBODIMENTS

Technical schemes in embodiments of the present application are clearly and completely described below in combination with the drawings in the embodiments of the present application. Apparently, the described embodiments are a part of the embodiments of the present application, not all of the embodiments. Based on the embodiments in the present application, all other embodiments obtained by those of ordinary skill in the art without creative labor shall fall within a scope of protection of the present application.

It should be noted that experimental methods described in the following implementation schemes, unless otherwise specified, are all conventional methods, and the reagents and materials may all be obtained commercially without special instructions; and in the description of the present application, the orientation or position relationship indicated by terms "crosswise", "longitudinal", "upper", "lower", "front", "back", "left", "right", "vertical", "horizontal", "top", "bottom", "inside", "outside" and the like is an orientation or position relationship based on the drawings, and is only for the convenience of describing the present application and simplifying the description, rather than indicates or implies that the device or element referred to must have a specific orientation, and be constructed and operated in the specific orientation. Therefore, it may not be understood as limitation to the present application.

In addition, terms "horizontal", "vertical", "overhang" and the like do not mean that the component is required to be absolutely horizontal or overhanging, but may be slightly tilted. For example, the "horizontal" only refers to its direction that is more horizontal compared to the "vertical", it does not mean that the structure must be completely horizontal, but may be slightly tilted.

In the description of the present application, it should also be noted that unless otherwise specified and limited, terms "arrangement", "installation", "linkage", and "connection" should be understood broadly, for example, it may be a fixed connection, a detachable connection, or an integrated connection; it may be a mechanical connection, or an electrical connection; and it may be a direct connection, or an indirect connection by an intermediate medium, or it may be an internal communication between two elements. For those of ordinary skill in the art, the specific meanings of the above terms in the present application may be understood in specific circumstances.

### Embodiment 1

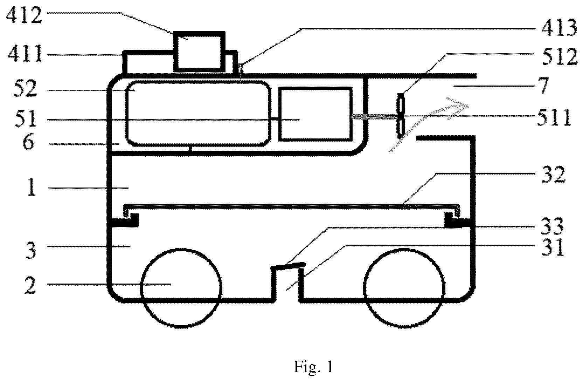

Fig. 1 shows a robot swimming pool cleaner capable of out-of-water detection, including a main body 1, a walking wheel group 2, a filtering chamber 3, a detection device, a control device, a sealing chamber 6, and a water spraying port 7. By arranging the detection device on the robot swimming pool cleaner, it is used to clean the water level line while the swimming pool wall or bottom is cleaned by the robot swimming pool cleaner, and detect whether the main body is out-of-water, thereby itself is avoided from exceeding the water surface and inhaling a large amount of the air, the water absorption and pollutant absorption of the robot swimming pool cleaner are avoided from being affected, and the cleaning efficiency and effect are improved.

Specifically, the walking wheel group 2 includes two groups of wheels, and it is mounted at the bottom of the main body 1 and used to drive the main body 1 to move.

Specifically, the filtering chamber 3 is arranged inside the main body 1, and located at the bottom of the main body 1; and the filtering chamber 3 includes: a water inlet 31 and a filter screen 32.

The water inlet 31 is arranged at the bottom of the filtering chamber 3, and located between the walking wheel groups 2; and the water inlet 31 is communicated with the outside by the filtering chamber 3, and separated by the chamber cover 33.

The filter screen 32 is arranged at the top of the filtering chamber 3, and used to filter garbage in water of the swimming pool and collect it into the filtering chamber 3.

Specifically, the detection device is mounted on the main body 1, and used to detect whether the main body 1 is out-of-water.

In this embodiment, the detection device includes a sliding rod detection device, and the sliding rod detection device includes: a sliding rod 411, a first buoyancy block 412, and a position sensor 413.

The sliding rod 411 is arranged at the top of the main body 1.

The first buoyancy block 412 is slidably connected to the sliding rod 411.

The position sensor 413 is arranged at one end, adjacent to the water spraying port 7, of the sliding rod 411, and used to detect the position of the first buoyancy block 412 on the sliding rod 411.

By arranging the sliding rod detection device, the position sensor 413 is used to detect the position of the first buoyancy block 412 on the sliding rod 411 during the cleaning process of the pool wall, and the out-of-water detection of the robot swimming pool cleaner is performed, to avoid it from exceeding the water level.

Specifically, the sealing chamber 6 is arranged inside the main body 1, and located above the filtering chamber 3.

Specifically, the water spraying port 7 is arranged inside the main body 1, and horizontally arranged with the sealing chamber 6; and the water spraying port 7 is communicated with the outside, and used to spray water filtered by the filter screen 32 out of the interior of the main body 1.

Specifically, the control device is mounted in the sealing chamber 6, the control device may be sealed better, and the control circuit 52 is prevented from contacting with the water.

The control device includes: a motor 51 and a control circuit 52.

An output shaft 511 of the motor 51 penetrates through the sealing chamber 6 and extends to the water spraying port 7, the motor 51 is dynamically seal-connected with the sealing chamber 6, and the output shaft 511 is equipped with an impeller, and used to drive a water flow inside the main body 1 to spray out.

The control circuit 52 is electrically connected with the motor 51 and the detection device respectively, and used to respectively drive the impeller 512 on the output shaft 511 to rotate and drive the main body 1 to move, receive an out-of-water detection signal sent by the detection device, and issue an alarm.

In this embodiment, the position sensor 413 is any one of a Hall sensor, a photoelectric switch, and a micro switch.

This embodiment further provides an out-of-water detection method for the robot swimming pool cleaner capable of out-of-water detection, position detection is performed while a swimming pool wall is cleaned by the robot swimming pool cleaner, it is judged whether the robot swimming pool cleaner is out-of-water, and by the position detection, it is judged whether the robot swimming pool cleaner is out-of-water, and it is ensured that the robot swimming pool cleaner may not cross the water line and always clean the pool wall or bottom, thereby the cleaning efficiency and the cleaning effect of the robot swimming pool cleaner are improved.

The position detection is to detect the position of the first buoyancy block 412 on the sliding rod 411 while the swimming pool wall is cleaned by the robot swimming pool cleaner, and used to detect whether the main body 1 is out-of-water.

While the position detection is performed, the control device controls the robot swimming pool cleaner to move vertically upwards along the pool wall. The specific process includes the following steps.
S1: while the robot swimming pool cleaner moves in an underwater position, and the water surface is higher than the top of the sliding rod 411, the first buoyancy block 412 continuously remains at the top of the sliding rod 411 under the buoyancy action;
S2: while the robot swimming pool cleaner continues to move upwards, and the water surface is located between the top and bottom of the sliding rod 411, the first buoyancy block 412 slides vertically downwards along the sliding rod 411 under the buoyancy action of water and its own gravity action; and
S3: while the robot swimming pool cleaner continues to move upwards, and the water surface does not exceed the bottom of the sliding rod 411, the first buoyancy block 412 continuously remains at the bottom of the sliding rod 411 under its own gravity action, and the position sensor 413 detects the position of the first buoyancy block 412, identifies a robot swimming pool cleaner out-of-water signal, and issues an alarm prompt.

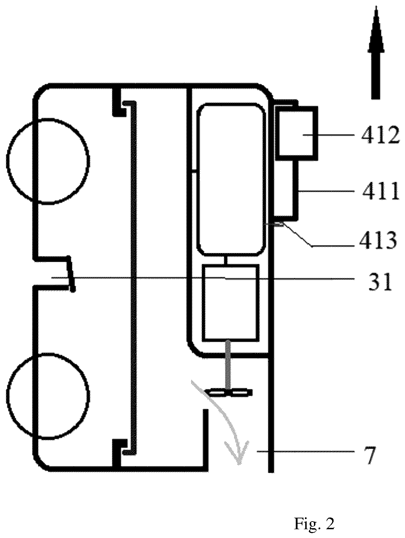

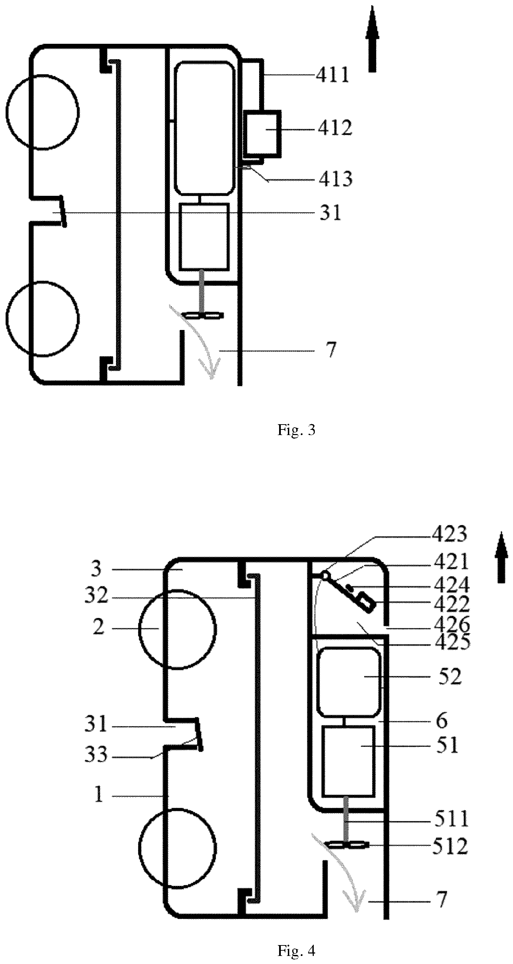

Fig. 2 shows a schematic diagram of the robot swimming pool cleaner while it moves vertically upwards and is in an underwater position during the pool wall cleaning process; and Fig. 3 shows a schematic diagram of the robot swimming pool cleaner while it moves vertically upwards and exceeds the water line during the pool wall cleaning process.

### Embodiment 2

This embodiment provides another robot swimming pool cleaner capable of out-of-water detection, including a main body 1, a walking wheel group 2, a filtering chamber 3, a detection chamber 425, a detection device, a control device, a sealing chamber 6, and a water spraying port 7. By arranging the detection device on the robot swimming pool cleaner, it is used to clean the water level line while the swimming pool wall or bottom is cleaned by the robot swimming pool cleaner, and detect whether the main body is out-of-water by angle detection, thereby itself is avoided from exceeding the water surface and inhaling a large amount of the air, the water absorption and pollutant absorption of the robot swimming pool cleaner are avoided from being affected, and the cleaning efficiency and effect are improved.

Specifically, the walking wheel group 2 includes two groups of wheels, and it is mounted at the bottom of the main body 1 and used to drive the main body 1 to move.

Specifically, the filtering chamber 3 is arranged inside the main body 1, and located at the bottom of the main body 1; and the filtering chamber 3 includes: a water inlet 31 and a filter screen 32.

The water inlet 31 is arranged at the bottom of the filtering chamber 3, and located between the walking wheel groups 2; and the water inlet 31 is communicated with the outside by the filtering chamber 3, and separated by the chamber cover 33.

The filter screen 32 is arranged at the top of the filtering chamber 3, and used to filter garbage in water of the swimming pool and collect it into the filtering chamber 3.

Specifically, the detection chamber 425 is arranged inside the main body 1, and located at the top of the main body 1; the detection chamber 425 is provided with a detection port 426 communicated with the outside; and the detection chamber 425 is horizontally arranged with the sealing chamber 6 and the water spraying port 7, and arranged at one end away from the water spraying port 7.

Specifically, the detection device is mounted on the main body 1, and used to detect whether the main body 1 is out-of-water.

In this embodiment, the detection device includes a swing rod detection device, and the swing rod detection device is mounted in the detection chamber 425; and the swing rod detection device includes: a swing rod 421, a second buoyancy block 422, a limiting block 424, and an angle sensor.

One end of the swing rod 421 is connected to an inner wall of the detection chamber 425, and the other end of the swing rod 421 is rotated around a connection point connected to the inner wall of the detection chamber 425.

The second buoyancy block 422 is arranged at one end, away from the connection point, of the swing rod 421.

The limiting block 424 is fixedly mounted on the inner wall of the detection chamber 425, located on a rotation stroke of the swing rod 421, and used to limit the rotation angle of the swing rod 421.

The angle sensor 423 is arranged at the connection point, and used to detect the rotation angle of the swing rod 421.

By arranging the swing rod detection device and arranging the second buoyancy block 422 on the swing rod 421, the influence of friction during the swing rod 421 rotation is reduced, thereby a situation of jamming and failure in the rotation process is effectively avoided; at the same time, the angle sensor 423 is used to detect the rotation angle of the swing rod 421 in the cleaning process of the cleaning pool wall or bottom, and the out-of-water detection of the robot swimming pool cleaner is performed, to avoid it from exceeding the water level.

Specifically, the sealing chamber 6 is arranged inside the main body 1, and located above the filtering chamber 3.

Specifically, the water spraying port 7 is arranged inside the main body 1, and horizontally arranged with the sealing chamber 6; and the water spraying port 7 is communicated with the outside, and used to spray water filtered by the filter screen 32 out of the interior of the main body 1.

Specifically, the control device is mounted in the sealing chamber 6, the control device may be sealed better, and the control circuit 52 is prevented from contacting with the water.

The control device includes: a motor 51 and a control circuit 52.

An output shaft 511 of the motor 51 penetrates through the sealing chamber 6 and extends to the water spraying port 7, the motor 51 is dynamically seal-connected with the sealing chamber 6, and the output shaft 511 is equipped with an impeller, and used to drive a water flow inside the main body 1 to spray out.

The control circuit 52 is electrically connected with the motor 51 and the detection device respectively, and used to respectively drive the impeller 512 on the output shaft 511 to rotate and drive the main body 1 to move, receive an out-of-water detection signal sent by the detection device, and issue an alarm.

In this embodiment, the angle sensor 423 is any one of a Hall sensor, a photoelectric switch, and a micro switch.

This embodiment further provides an out-of-water detection method for the robot swimming pool cleaner capable of out-of-water detection, angle detection is performed while a swimming pool wall or bottom is cleaned by the robot swimming pool cleaner, it is judged whether the robot swimming pool cleaner is out-of-water, and by the angle detection, it is ensured that the robot swimming pool cleaner may not cross the water line and always clean the pool wall or bottom, thereby the cleaning efficiency and the cleaning effect of the robot swimming pool cleaner are improved.

The angle detection is to detect the rotation angle of the swing rod 421 while the swimming pool wall or bottom is cleaned by the robot swimming pool cleaner, and used to detect whether the main body 1 is out-of-water.

While the angle detection is performed, the control device controls the robot swimming pool cleaner to move vertically upwards along the pool wall or move horizontally along the pool bottom. The specific process includes the following steps.
T1: while the robot swimming pool cleaner moves in an underwater position, and the water surface is higher than the limiting block 424, the second buoyancy block 422 on the swing rod 421 continuously makes the swing rod 421 abut with the limiting block 424 under the buoyancy action;
T2: while the robot swimming pool cleaner continues to move upwards along the pool wall or move horizontally along the pool bottom, and the water surface is located between the limiting block 424 and the bottom of the swing rod 421, the second buoyancy block 422 on the swing rod 421 is rotated around the connection point of the swing rod 421 in the direction away from the limiting block 424 under the buoyancy action of water and its own gravity action; and
T3: while the robot swimming pool cleaner continues to move upwards along the pool wall or move horizontally along the pool bottom, and the water surface does not exceed the bottom of the swing rod 421, the second buoyancy block 422 on the swing rod 421 continuously keeps the swing rod 421 in a vertical downward or horizontal state under its own gravity action, and the angle sensor 423 detects the rotation angle of the swing rod 421, identifies a robot swimming pool cleaner out-of-water signal, and issues an alarm prompt.

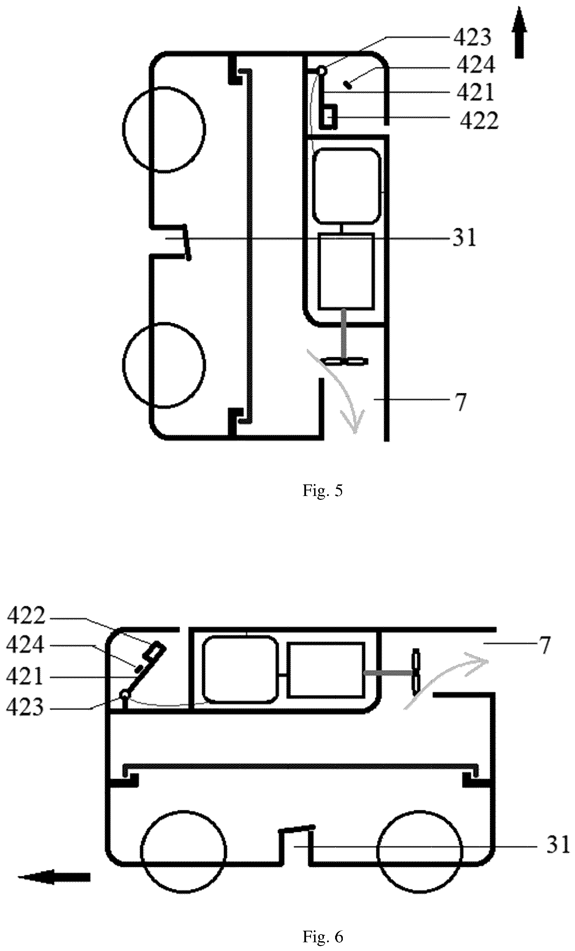

Fig. 4 shows a schematic diagram of the robot swimming pool cleaner while it moves vertically upwards and is in the underwater position during the pool wall cleaning process; and Fig. 5 shows a schematic diagram of the robot swimming pool cleaner while it moves vertically upwards and exceeds the water line during the pool wall cleaning process.

In the description of this description, the description of reference terms "one embodiment", "some embodiments", "examples", "specific examples", or "some examples" or the like means that specific features, structures, materials, or features described in combination with this embodiment or example are contained in at least one embodiment or example of the present application. In this description, the schematic expression of the above terms does not necessarily refer to the same embodiment or example. Moreover, the specific features, structures, materials, or features described may be combined in any one or more embodiments or examples in an appropriate manner.

Although the embodiments of the present application are already shown and described above, it may be understood that the above embodiments are exemplary and may not be understood as limitation to the present application. Those of ordinary skill in the art may make changes, modifications, replacements, and variations to the above embodiments within the scope of the present application.

## Claims

1. A robot swimming pool cleaner capable of out-of-water detection, **characterized by** comprising:
a main body (1);
a walking wheel group (2), wherein the walking wheel group (2) being mounted at the bottom of the main body (1), and used to drive the main body (1) to move;
a filtering chamber (3), wherein the filtering chamber (3) being arranged inside the main body (1), and the filtering chamber (3) being located at the bottom of the main body (1); the bottom of the filtering chamber (3) being communicated with the outside by a water inlet (31), the top of the filtering chamber (3) being provided with a filter screen (32), and the filter screen (32) being used to filter and store garbage into the filtering chamber (3);
a detection device, wherein the detection device comprising a sliding rod detection device and/or a swing rod detection device, the sliding rod detection device being used to judge whether the main body (1) is out-of-water by detecting a vertical position of a pre-arranged first buoyancy block (412), and the density of the first buoyancy block (412) being less than the density of water; the swing rod detection device comprising a swing rod (421) and a second buoyancy block (422) arranged at one end of the swing rod (421), the other end of the swing rod (421) being rotatably connected with the main body (1), the swing rod detection device being used to judge whether the main body (1) is out-of-water by detecting a rotation angle of the swing rod (421), and the density of the second buoyancy block (422) being less than the density of water; and
a control device, wherein the control device being mounted inside the main body (1), and connected with the detection device.

2. The robot swimming pool cleaner capable of out-of-water detection as claimed in claim 1, **characterized in that** the sliding rod detection device further comprises a sliding rod (411) and a position sensor (413), the sliding rod (411) is arranged at the top of the main body (1), the first buoyancy block (412) is slidably connected to the sliding rod (411), the position sensor (413) is arranged on the sliding rod (411), and the position sensor (413) is used to detect the position of the first buoyancy block (412) on the sliding rod (411).

3. The robot swimming pool cleaner capable of out-of-water detection as claimed in claim 1 or 2, **characterized by** further comprising:
a detection chamber (425), wherein the detection chamber (425) being arranged inside the main body (1), and the detection chamber (425) being located at the top of the main body (1); the detection chamber (425) being provided with a detection port (426), and the detection port (426) being communicated with the outside;
the swing rod detection device is mounted in the detection chamber (425), and the swing rod detection device is used to judge whether the main body (1) is out-of-water by angle detection; the swing rod detection device further comprises a limiting block (424) and an angle sensor (423), one end of the swing rod (421) is connected to an inner wall of the detection chamber (425), the other end of the swing rod (421) is rotated around a connection point connected to the inner wall of the detection chamber (425), the second buoyancy block (422) is arranged at one end, away from the connection point, of the swing rod (421), the limiting block (424) is fixedly mounted on the inner wall of the detection chamber (425), the limiting block (424) is located on a rotation stroke of the swing rod (421), the limiting block (424) is used to limit the rotation angle of the swing rod (421), the angle sensor (423) is arranged at the connection point, and the angle sensor (423) is used to detect the rotation angle of the swing rod (421).

4. The robot swimming pool cleaner capable of out-of-water detection as claimed in claim 2 or 3, **characterized in that** the main body (1) is further internally provided with a sealing chamber (6) and a water spraying port (7), the sealing chamber (6) and the water spraying port (7) are both arranged above the filtering chamber (3), and the sealing chamber (6) is horizontally arranged with the water spraying port (7); and the water spraying port (7) is communicated with the outside, and the water spraying port (7) is used to spray water filtered by the filter screen (32) out of the interior of the main body (1).

5. The robot swimming pool cleaner capable of out-of-water detection as claimed in claim 4, **characterized in that** the control device is mounted in the sealing chamber (6); and the control device comprises:
a motor (51), wherein an output shaft (511) of the motor (51) penetrating through the sealing chamber (6) and extending to the water spraying port (7), the motor (51) being dynamically seal-connected with the sealing chamber (6), and the output shaft (511) being equipped with an impeller (512); and
a control circuit (52), wherein the control circuit (52) being electrically connected with the motor (51) and the detection device respectively, the control circuit (52) being used to drive the impeller (512) on the output shaft (511) to rotate and drive the main body (1) to move, receive an out-of-water detection signal sent by the detection device, and issue an alarm.

6. The robot swimming pool cleaner capable of out-of-water detection as claimed in claim 2 or 3, **characterized in that** the position sensor (413) and the angle sensor (423) are any one of a Hall sensor, a photoelectric switch, and a micro switch.

7. The robot swimming pool cleaner capable of out-of-water detection as claimed in claim 5, **characterized in that** the detection chamber (425) is horizontally arranged with the sealing chamber (6) and the water spraying port (7), and the detection chamber (425) is arranged at one end away from the water spraying port (7).

8. An out-of-water detection method for the robot swimming pool cleaner capable of out-of-water detection as claimed in claim 6, **characterized in that** position detection is performed on the robot swimming pool cleaner while a swimming pool wall is cleaned, and by detecting the position of the first buoyancy block (412) on the sliding rod (411) while the swimming pool wall is cleaned by the robot swimming pool cleaner, it is judged whether the main body (1) is out-of-water.

9. The out-of-water detection method for the robot swimming pool cleaner capable of out-of-water detection as claimed in claim 8, **characterized in that** while the position detection is performed, the control device controls the robot swimming pool cleaner to move vertically upwards along the pool wall. The specific process comprises the following steps:
S1: while the robot swimming pool cleaner moves in an underwater position, and the water surface is higher than the top of the sliding rod (411), the first buoyancy block (412) continuously remains at the top of the sliding rod (411) under the buoyancy action;
S2: while the robot swimming pool cleaner continues to move upwards, and the water surface is located between the top and bottom of the sliding rod (411), the first buoyancy block (412) slides vertically downwards along the sliding rod (411) under the buoyancy action of water and its own gravity action; and
S3: while the robot swimming pool cleaner continues to move upwards, and the water surface does not exceed the bottom of the sliding rod (411), the first buoyancy block (412) continuously remains at the bottom of the sliding rod (411) under its own gravity action, and the position sensor (413) detects the position of the first buoyancy block (412), identifies a robot swimming pool cleaner out-of-water signal, and issues an alarm prompt.

10. An out-of-water detection method for the robot swimming pool cleaner capable of out-of-water detection as claimed in claim 7, **characterized in that** angle detection is performed on the robot swimming pool cleaner while a swimming pool wall or bottom is cleaned, and by detecting the rotation angle of the swing rod (421) while the swimming pool wall or bottom is cleaned by the robot swimming pool cleaner, it is judged whether the main body (1) is out-of-water.

11. The out-of-water detection method for the robot swimming pool cleaner capable of out-of-water detection as claimed in claim 10, **characterized in that** while the angle detection is performed, the control device controls the robot swimming pool cleaner to move vertically upwards along the pool wall or move horizontally along the pool bottom. The specific process comprises the following steps:
T1: while the robot swimming pool cleaner moves in an underwater position, and the water surface is higher than the limiting block (424), the second buoyancy block (422) on the swing rod (421) continuously makes the swing rod (421) abut with the limiting block (424) under the buoyancy action;
T2: while the robot swimming pool cleaner continues to move upwards along the pool wall or move horizontally along the pool bottom, and the water surface is located between the limiting block (424) and the bottom of the swing rod (421), the second buoyancy block (422) on the swing rod (421) is rotated around the connection point of the swing rod (421) in the direction away from the limiting block (424) under the buoyancy action of water and its own gravity action; and
T3: while the robot swimming pool cleaner continues to move upwards along the pool wall or move horizontally along the pool bottom, and the water surface does not exceed the bottom of the swing rod (421), the second buoyancy block (422) on the swing rod (421) continuously keeps the swing rod (421) in a vertical downward or horizontal state under its own gravity action, and the angle sensor (423) detects the rotation angle of the swing rod (421), identifies a robot swimming pool cleaner out-of-water signal, and issues an alarm prompt.
